# EUROPEAN PATENT SPECIFICATION

(11) **EP 2 144 342 B1**
(45) Date of publication and mention of the grant of the patent: **05.08.2020**
(21) Application number: 09164250.4
(22) Date of filing: 30.06.2009
(51) Int. Cl.: H02B 1/36, H02B 1/28, H02B 11/02, H02B 1/38

(54) **Drawout door interface for circuit breaker**
Einschubtürschnittstelle für einen Schutzschalter
Interface de porte de sortie pour disjoncteur

(30) Priority: 11.07.2008 PL 38564608; 12.08.2008 US 189922
(43) Date of publication of application: 13.01.2010
(73) Proprietor: ABB Schweiz AG, 5400 Baden (CH)
(72) Inventor: Ignasiak, Tomasz, 43-300, Slaskie (PL); Skrudlik, Adam, 43-300 Slaskie (PL)
(74) Representative: Aipex B.V.

(56) References cited:
- EP-A1- 0 621 614
- US-A- 2 811 618
- US-A- 2 959 714

## Description

The subject matter disclosed herein relates to a door interface for a circuit breaker drawout mechanism. In particular, the subject matter disclosed herein relates to an interface that provides ingress protection while the circuit breaker is located in different positions within the draw out mechanism.

Drawout circuit breakers often include a mechanism for moving the breaker in and connecting the breaker to corresponding electrical contacts, a location known as the "racked-in" position. When in the racked-in position, the circuit breaker is coupled to the main electrical circuit and provides the interruption functionality for which it is intended. If the drawout mechanism is reversed to the "racked-out" position, the circuit breaker is disconnected from the electrical contacts and the main electrical circuit. The circuit breaker may be moved to the racked-out position, for example, when maintenance is performed on the main electrical circuit. Typical racking mechanisms often include a third or test position. In the test position the circuit breaker can be closed, opened or tripped in order to check internal and external accessories such as auxiliary switches, shunt trip and under voltage and secondary circuits.

During each of the positions, it is desirable for the drawout mechanism to provide ingress protection (IP) such as IP4X defined by international standard IEC 60529. IP sets limits on openings in the equipment that would allow the insertion objects, such as a finger or wires for example, that could contact electrically live components. In the case of IP4X, openings cannot allow an object larger than 1 mm.

US 2811618 describes a drawout switchgear according to the preamble of claim 1, where the operating handle of the drawout circuit breaker extends outside the enclosure.

EP 0621614 describes a draw-out switchgear including an enclosure having a door with an opening through which a protective extension of the drawout circuit breaker casing passes to allow the operation of the drawout circuit breaker.

While existing circuit breaker drawout mechanisms are suitable for their intended purposes, there still remains a need for improvements particularly regarding the interface between the circuit breaker and the drawout mechanism that provides for ingress protection and allows the drawout housing door to be opened when the circuit breaker is in the racked-in, racked-out and the test positions.

According to the present invention there is provided a drawout interface corresponding to claim 1.

Referring now to the drawings, which are meant to be exemplary and not limiting, and wherein like elements are numbered alike:
FIGURE 1 is a schematic perspective view illustration of a drawout circuit breaker system in accordance with the exemplary embodiment;
FIGURE 2 is a schematic plan side view illustration of the drawout circuit breaker system of Figure 1 in the racked-in position;
FIGURE 3 is a schematic plan side view illustration of the drawout circuit breaker system of Figure 1 in the test position;
FIGURE 4 is a schematic plan side view illustration of the drawout circuit breaker system of Figure 1 in the withdrawn or racked-out position;
FIGURE 5 is a perspective plan view illustration of the drawout interface for the drawout circuit breaker system of Figure 1 in the racked-in position;
FIGURE 6 is a perspective plan view illustration of the drawout interface for the drawout circuit breaker system of Figure 1 in the test position;
FIGURE 7 is a side plan view illustration of the drawout circuit breaker system of Figure 1 in the racked-out position; and,
FIGURE 8 is a partial perspective view illustration partially in section of the drawout circuit breaker system of Figure 1;
FIGURE 9 is a partial side plan sectional view illustration of an alternate embodiment drawout interface in the racked-out position;
FIGURE 10 is a detailed side plan sectional view illustration of the drawout interface of Figure 9 ;
FIGURE 11 is a partial side plan sectional view illustration of the drawout interface embodiment of

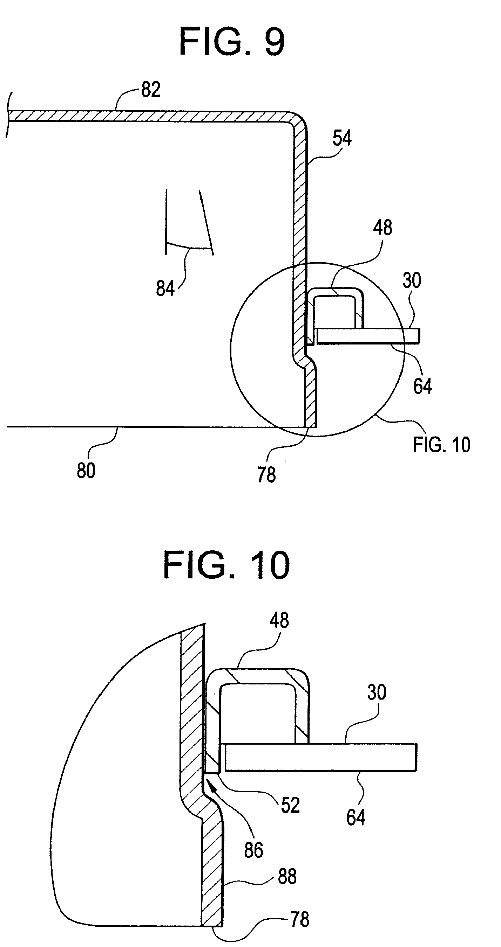

Figure 9 in the racked-in position; and,

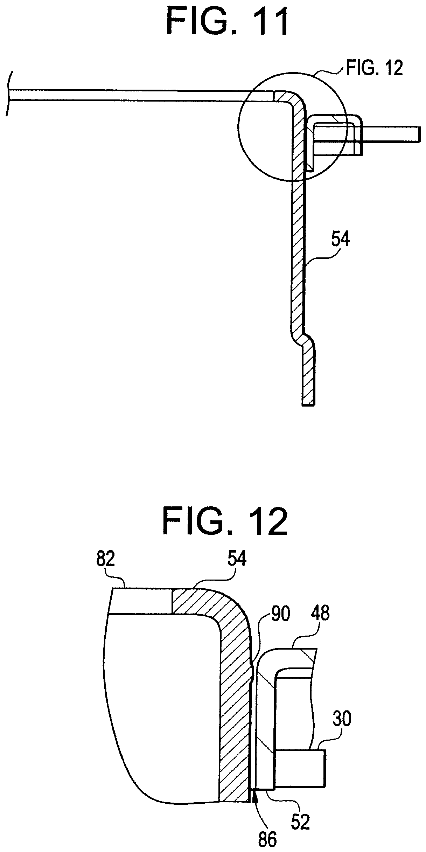

FIGURE 12 is a detailed side plan sectional view illustration of the drawout interface of Figure 11.

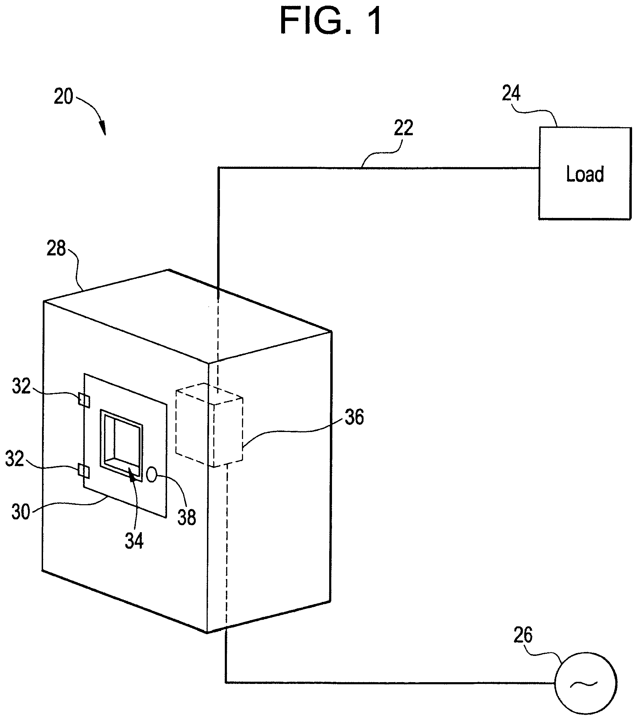

Figures 1 - 4 illustrate a drawout circuit breaker system 20. The drawout circuit breaker 20 is coupled between a main electrical circuit 22 having a protected load 24 and a power source 26 such as an electrical utility network. The drawout circuit breaker 20 includes a housing 28. A door 30 is coupled to the housing 28 by hinges 32. As will be discussed in more detail below, the door 30 includes an opening 34 that allows the operator access to a circuit breaker 36 located within the housing 28. Another opening 38 allows the operator to activate a drawout mechanism 40. The circuit breaker 36 is electrically coupled between the power source 26 and the protected load 24.

It should be appreciated that the circuit breaker 36 is illustrated in the exemplary embodiment having a single connection to the power source 26 and the protected load 24. However, the circuit breaker 36 may be comprised of multiple electrical phases or connections. Further, the circuit breaker 36 may be known as a multi-pole circuit breaker having multiple contact arms that connect and disconnected the main electrical circuit 22 from the power source 26. A "multi-pole" circuit breaker the circuit breaker will typically have three or four poles, each carrying a different phase of electricity through the circuit breaker 36. Further, in the exemplary embodiment, the circuit breaker 36 is a molded case circuit breaker (MCCB) where the circuit breaker components are housed within an insulated polymer housing. However, but other types of circuit breakers, such as open frame air circuit breakers may also be used.

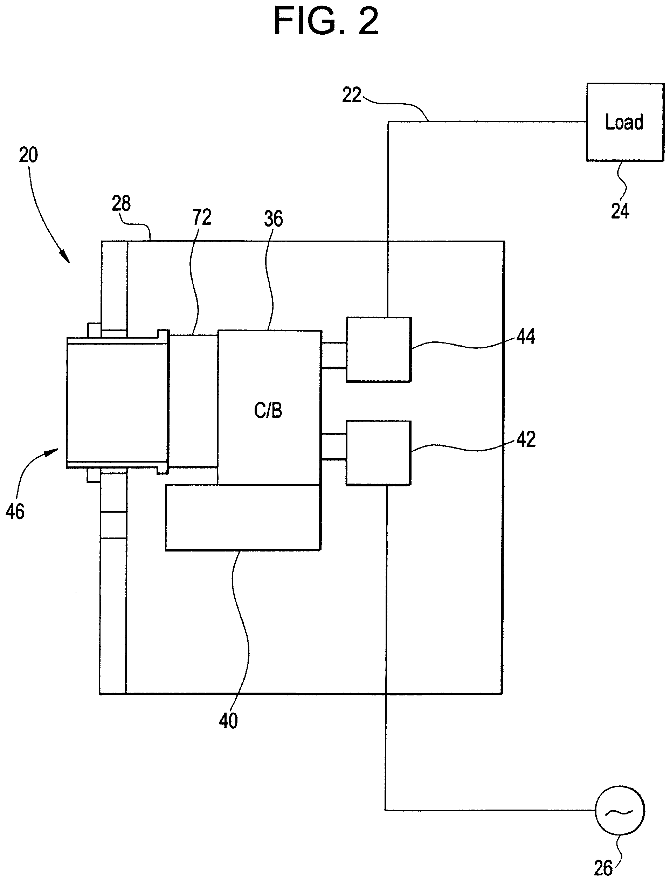

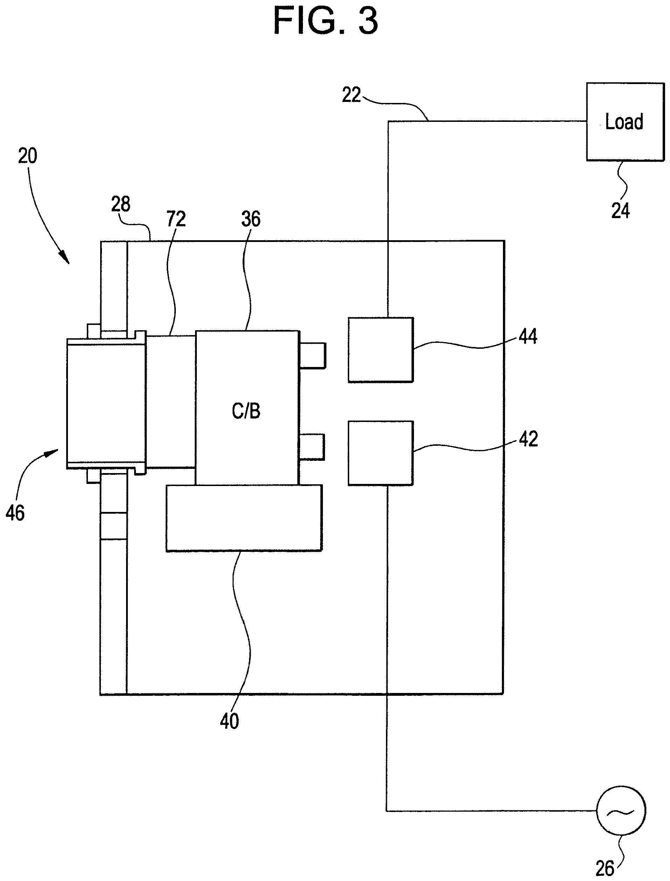

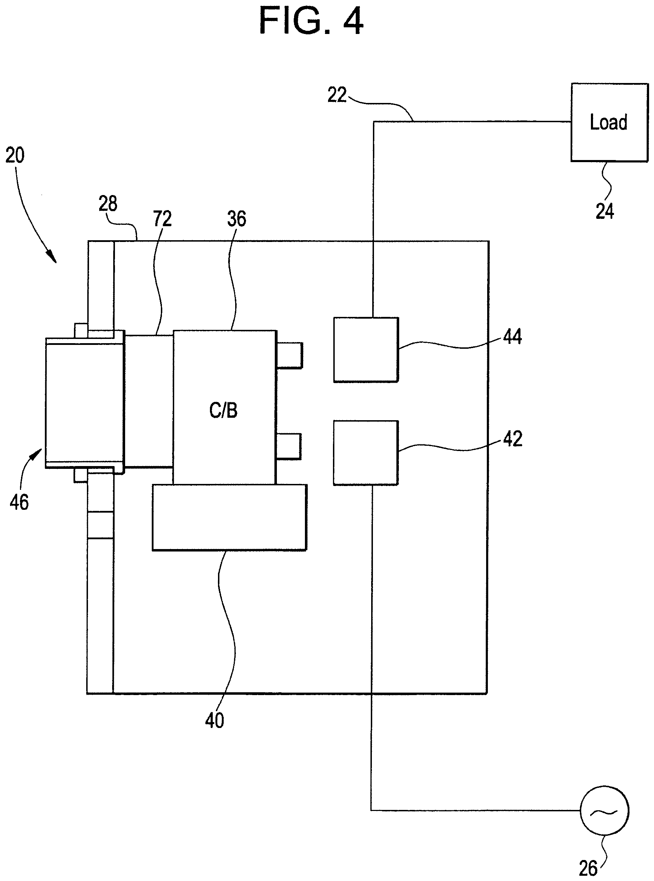

Referring to Figures 2-4, the positions of the drawout system 20 will be described. The drawout system 20 is used to allow an operator to physically connect and remove the circuit breaker 36 into and out of connection with the electrical circuit 22 without having to manually remove the cabling or other electrical connections. An operator may need to disconnect the circuit breaker 36 so that downstream maintenance tasks may be performed for example. To accomplish this, the circuit breaker 36 is mounted to a drawout mechanism 40 as is known in the art. The drawout mechanism 40 includes means for moving the circuit breaker 36 into and out of contact with electrical contacts 42, 44. The inlet contacts 42 connect the circuit breaker 36 to the power source 26 while the outlet contacts 44 provide a connection to the load 24. When the drawout mechanism 40 moves the circuit breaker 36 away from the contacts 42, 44 (Figure 3, Figure 4), the electrical connection is broken and no electrical power can flow from the power source 26 to the load 24.

In general, drawout systems have three positions in which the circuit breaker 36 may be positioned. In the racked-in position illustrated in Figure 2, the circuit breaker 36 is coupled to the contacts 42, 44 and electrical power will flow if the circuit breaker 36 is closed. At the opposite end of the range of travel is the withdrawn or "racked-out" position illustrated in Figure 4. In the racked-out position, the circuit breaker is disconnected from the contacts 42, 44. Further, when in the racked-out position, the drawout system 20 will typically have an interlock arrangement that prevents the circuit breaker 36 from being operated. Finally, as illustrated in Figure 3, intermediate to the racked-in and racked-out positions is what is commonly referred to as the test position. When in the test position, the circuit breaker 36 is not interlocked and may be operated so that the functions of the circuit breaker may be tested.

It should be appreciated that even when the circuit breaker 36 is in the racked-out position, the drawout system 20 may contain active or live electrical connections. Therefore, it is desirable to prevent objects, such as fingers or wires for example, from coming into contact with the electrical connections. The ingress protection (IP) is defined by international standard IEC 60529 for various application or protection ratings. In the case of drawout system 20, it is desirable to achieve an IP4 rating, meaning that objects greater than 1 mm in diameter can not access live electrical components.

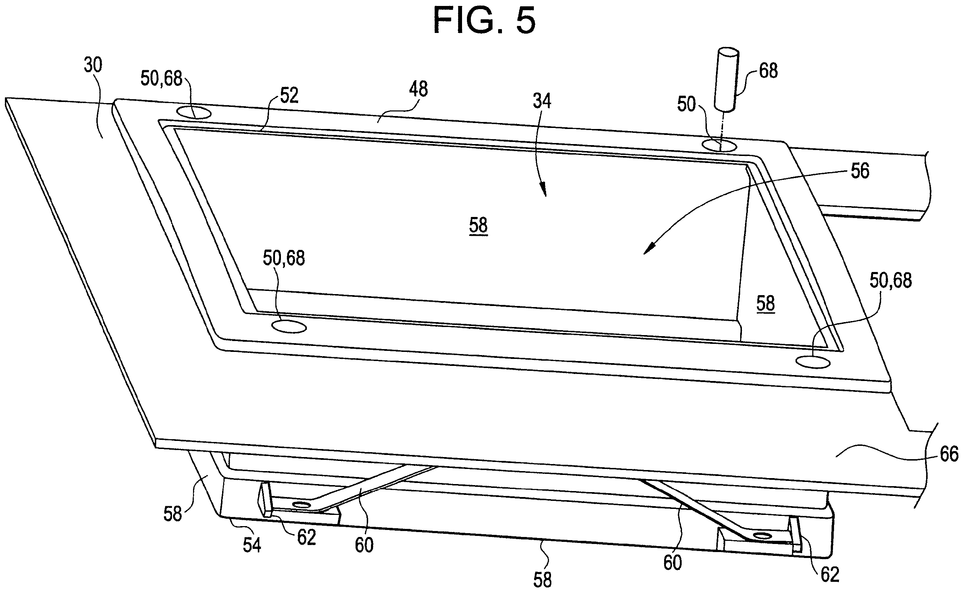

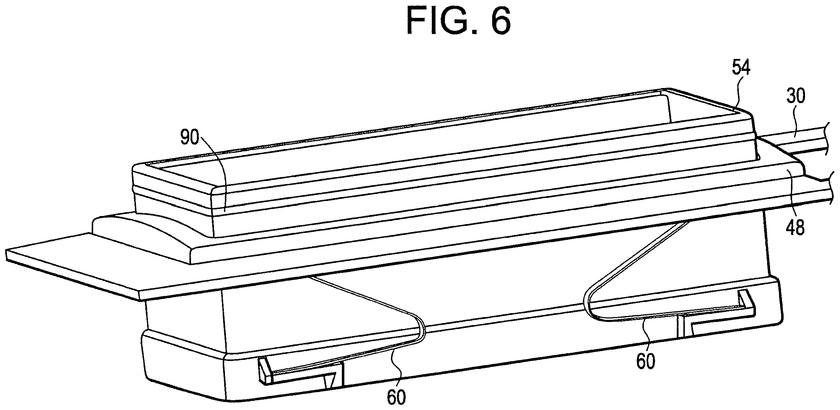

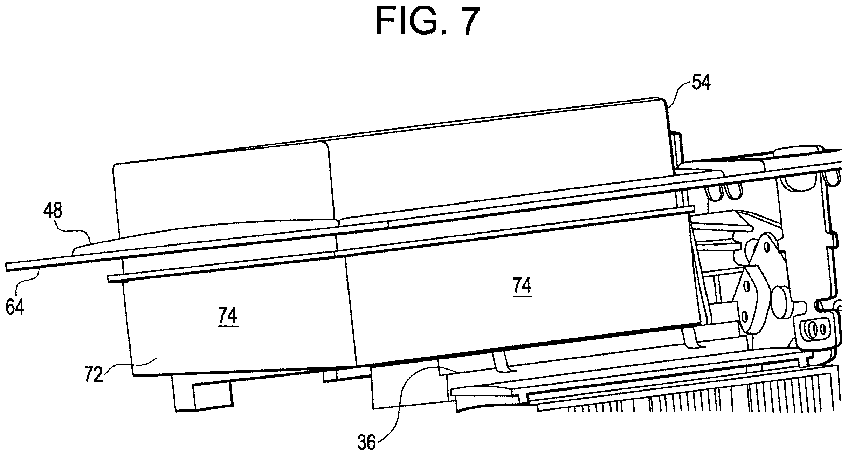

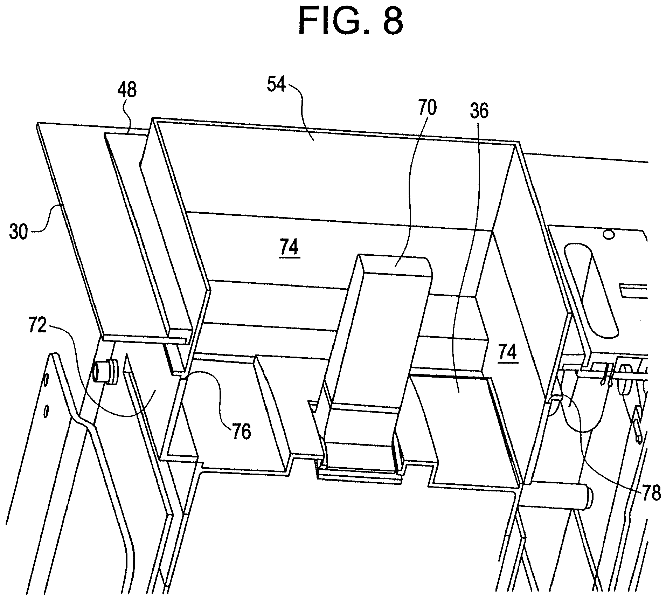

Since the circuit breaker 36 moves relative to a stationary door 30, a drawout interface 46 is provided to maintain the desired IP rating for the drawout system 20. Referring now to Figures 2-8, the exemplary embodiment drawout interface is discussed. The drawout interface 46 includes a flange 48 that is mounted to the front side 66 of door 30. The flange 48 is arranged around the periphery of the opening 34. The flange includes a plurality of holes 50 that are sized to receive fasteners 68, such as a bolt or rivet for example. The flange 48 also includes a projection 52 (Figure 10) that extends into the opening 34 and covers the edge of the door 30.

A sleeve 54 is positioned with the opening 34. As will be discussed in more detail below, the sleeve is arranged to move within the opening 34 as the circuit breaker 36 moves from the racked-in to the racked-out position. The sleeve 54 includes an interior portion 56 formed by sidewalls 58. The interior portion is sized to allow the operator access to the circuit breaker operating handle 70. The sleeve 54 is coupled to the door 30 via springs 60. In one embodiment, the springs 60 are attached by fasteners to projections 62 that extend from the sidewalls 58. The opposite ends of the springs attach to the backside 64 of door 30. In the exemplary embodiment, the springs 60 are a leaf type spring that attaches to the door 30 by fasteners 68. A pair of springs 60 are positioned adjacent two of the sidewalls 58. It should be appreciated that while spring 60 is illustrated in the exemplary embodiment, any suitable elastic member capable of biasing the sleeve towards the circuit breaker 36 when the door 30 is in a closed position. Therefore, the spring 60 may be an extension spring, a compression spring, a torsion spring, or a Bellville washer for example. The spring 60 may also be an elastic member such as a grommet made from an elastomer, rubber or a polymer for example.

The sleeve 54 is sized such that the gap 86 (Figure 10) between the sleeve 54 and the flange 48 is sufficiently small to meet or exceed the desired IP rating. This gap 86 needs to be maintained as the sleeve 54 travels between the racked-in position, the test position and the racked-out positions. In the exemplary embodiment, the maximum gap size is 1 mm or less to allow an IP4 rating.

Another embodiment of sleeve 54 is illustrated in Figures 9 -12. In this embodiment, the sidewalls 58 are formed on a small angle 84 such that an end 80 closest to the circuit breaker 36 has a larger width and length than the opposite end 82. For example, if the sleeve 54 is formed by injection molding a polymer, an angle or draft is needed by the manufacturing process to allow the part to be removed from the mold. In one embodiment, the angle 84 is approximately ½ degree per side. While the angle 84 increases the manufacturability of the sleeve 54, this may cause an issue with the IP rating since the gap 86 will increase as the sleeve 54 moves from the racked-out position, illustrated in Figure 9 and Figure 10, to the racked-in position, illustrated in Figure 11 and Figure 12 .

To alleviate this issue and maintain a lower IP rating, the embodiment illustrated in Figures 9 - 12, incorporates features that compensate for the change in gap 86 caused by the draft angle 84. The sleeve 54 includes a lower projection 88 that extends outward from the sidewalls 58. The projection 88 increases the width and length of the end 80 extending the outer surface of the projection 88 beyond the edge of the gap 86. This arrangement creates a labyrinth type path with regards to IP ratings since if an object is inserted into the gap 86, it cannot merely slide into the interior of the drawout system 20, but rather must navigate around the projection 88. Thus, the projection 88 increases the IP rating.

To further accommodate the draft angle 84, the sleeve also incorporates another projection 90. Due to the draft, the gap 86 widens as the circuit breaker 36 moves towards the racked-in position and the end 82 approaches the flange 48. Further, since the projection 88 is further from the opening 34, it provides less of a labyrinth than when in the racked-out or test positions. The projection 90 is offset from the end 82 and positioned to be adjacent to the flange or otherwise inside the opening 34 when the circuit breaker 36 is in the racked-in position. The projection 90 reduces the gap 86, thus improving the IP rating even though the draft angle 84 would otherwise have had a detrimental affect on the IP rating. In one embodiment, the projection 90 is small enough to allow it to be molded and removed from the mold without resorting to complex techniques (e.g. collapsible core molds). In the exemplary embodiment, the projection 90 is 0.2 mm in depth and 1 - 2 mm wide.

It should be appreciated that the drawout interface 46 arrangement provides a number of advantages to service personnel and in the manufacture of the drawout system 20. The drawout interface 46 allows the manufacturer to fabricate the individual components with lower tolerancing and using less complicated fabrication methods. The drawout interface 46 also allows the installation personnel access to the circuit breaker 36 while minimizing their exposure to electrical components through a low IP rating. The drawout interface 46 further allows the circuit breaker to be operated in open or closed position, while maintaining a low IP rating.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A drawout interface (46) for a drawout circuit breaker (36) comprising:
a door (30) having a first opening (34) therein, said door (30) having a first side (66) and a second side (64);
a flange (48) disposed about said opening (34) and fixedly coupled to said door first side (66), said flange (48) having a first projection (52) that extends into said first opening (34);
a sleeve (54) movably coupled to said door (30) and positioned within said first opening (34), said sleeve (54) having a second opening (56) therethrough; and
a spring (60) coupled between said sleeve (54) and said door second side (64),
wherein the drawout interface (46) allows the circuit breaker to be operated in a racked-in position and a test position,
**characterized in that** the sleeve (54) includes an interior portion (56) formed by sidewalls (58), which interior portion (56) is sized to allow an operator access to a circuit breaker operating handle (70).

2. The drawout interface (46) of Claim 1, wherein said sleeve (54) includes a first end and a second end opposite said first end, said first end being adjacent said door first side (66) when said sleeve (54) is in a first position and said second end being adjacent said door second side (64) when said sleeve (54) is in a second position.

3. The drawout interface (46) of Claim 2, wherein said sleeve (54) includes a plurality of sidewalls (58) extending around the periphery of said second opening (56).

4. The drawout interface (46) of Claim 3, wherein said sleeve (54) further includes a second projection (90) opposite said second opening (56) and extending from said sidewalls (58), said second projection (90) being offset from said first end wherein said second projection (90) is adjacent said first projection (52) when said sleeve (54) is in said first position.

5. The drawout interface (46) of Claim 4, wherein said sleeve (54) further includes a third projection (88) coupled to said sidewalls (58) at said second end, wherein said third projection (88) is adjacent said door second side (64) when said sleeve (54) is in said second position.

6. The drawout interface of Claim 5, further comprising a plurality of fasteners coupling said flange to said door and said spring.

7. The drawout interface of Claim 5, wherein said sleeve and said flange are sized such that a gap between said sleeve and said first projection provides ingress protection for objects having a size of 1 mm or greater.

## Patentansprüche

1. Einschubschnittstelle (46) für einen Einschubschutzschalter (36), Folgendes umfassend:
eine Tür (30) mit einer ersten Öffnung (34) darin, wobei die Tür (30) eine erste Seite (66) und eine zweite Seite (64) aufweist;
einen Flansch (48), der um die Öffnung (34) angeordnet und fest an die erste Türseite (66) gekoppelt ist, wobei der Flansch (48) einen ersten Vorsprung (52) aufweist, der sich in die erste Öffnung (34) erstreckt;
eine Hülle (54), die beweglich an die Tür (30) gekoppelt und in der ersten Öffnung (34) positioniert ist, wobei die Hülle (54) eine zweite Öffnung (56) dadurch aufweist; und
eine Feder (60), die zwischen der Hülle (54) und der zweiten Türseite (64) gekoppelt ist,
wobei die Einschubschnittstelle (46) es dem Schutzschalter ermöglicht, in einer Betriebsstellung und in einer Teststellung betrieben zu werden,
**dadurch gekennzeichnet, dass** die Hülle (54) einen Innenabschnitt (56) beinhaltet, der von Seitenwänden (58) gebildet wird, wobei der Innenabschnitt (56) so bemessen ist, dass einem Betreiber der Zugang zu einem Betätigungsgriff (70) des Schutzschalters ermöglicht wird.

2. Einschubschnittstelle (46) nach Anspruch 1, wobei die Hülle (54) ein erstes Ende und ein zweites Ende, das dem ersten Ende gegenüberliegt, beinhaltet, wobei das erste Ende neben der ersten Türseite (66) liegt, wenn die Hülle (54) sich in einer ersten Position befindet, und das zweite Ende neben der zweiten Türseite (64) liegt, wenn die Hülle (54) sich in einer zweiten Position befindet.

3. Einschubschnittstelle (46) nach Anspruch 2, wobei die Hülle (54) eine Vielzahl von Seitenwänden (58) beinhaltet, die sich um den Umfang der zweiten Öffnung (56) erstreckt.

4. Einschubschnittstelle (46) nach Anspruch 3, wobei die Hülle (54) ferner einen zweiten Vorsprung (90) gegenüber der zweiten Öffnung (56) beinhaltet, der sich von den Seitenwänden (58) erstreckt, wobei der zweite Vorsprung (90) von dem ersten Ende versetzt ist, wobei der zweite Vorsprung (90) neben dem ersten Vorsprung (52) liegt, wenn die Hülle (54) sich in der ersten Position befindet.

5. Einschubschnittstelle (46) nach Anspruch 4, wobei die Hülle (54) ferner einen dritten Vorsprung (88) beinhaltet, der am zweiten Ende an die Seitenwände (58) gekoppelt ist, wobei der dritte Vorsprung (88) neben der zweiten Türseite (64) liegt, wenn die Hülle (54) sich in der zweiten Position befindet.

6. Einschubschnittstelle nach Anspruch 5, ferner umfassend eine Vielzahl von Befestigungsmitteln, die den Flansch an die Tür und die Feder koppelt.

7. Einschubschnittstelle nach Anspruch 5, wobei die Hülle und der Flansch so bemessen sind, dass eine Lücke zwischen der Hülle und dem ersten Vorsprung einen Eindringschutz gegen Objekte bereitstellt, die eine Größe von 1 mm oder größer aufweisen.

## Revendications

1. Interface de débrochage (46) pour un disjoncteur débrochable (36) comprenant :
une porte (30) ayant une première ouverture (34) dans celle-ci, ladite porte (30) ayant un premier côté (66) et un deuxième côté (64) ;
une bride (48) disposée autour de ladite ouverture (34) et couplée de manière fixe audit premier côté de porte (66), ladite bride (48) ayant une première saillie (52) qui s'étend dans ladite première ouverture (34) ;
un manchon (54) couplé de manière mobile à ladite porte (30) et positionné dans ladite première ouverture (34), ledit manchon (54) ayant une deuxième ouverture (56) à travers celui-ci ; et
un ressort (60) couplé entre ledit manchon (54) et ledit deuxième côté de porte (64),
dans laquelle l'interface de débrochage (46) permet au disjoncteur de fonctionner dans une position rangée à l'intérieur et une position de test,
**caractérisée en ce que** le manchon (54) comporte une partie intérieure (56) formée par des parois latérales (58), laquelle partie intérieure (56) est dimensionnée de manière à permettre à un opérateur d'accéder à une manette de commande de disjoncteur (70).

2. Interface de débrochage (46) de la revendication 1, dans laquelle ledit manchon (54) comporte une première extrémité et une deuxième extrémité opposée à ladite première extrémité, ladite première extrémité étant adjacente audit premier côté de porte (66) lorsque ledit manchon (54) est dans une première position et ladite deuxième extrémité étant adjacente audit deuxième côté de porte (64) lorsque ledit manchon (54) est dans une deuxième position.

3. Interface de débrochage (46) de la revendication 2, dans laquelle ledit manchon (54) comporte une pluralité de parois latérales (58) s'étendant autour de la périphérie de ladite deuxième ouverture (56).

4. Interface de débrochage (46) de la revendication 3, dans laquelle ledit manchon (54) comporte en outre une deuxième saillie (90) opposée à ladite deuxième ouverture (56) et s'étendant à partir desdites parois latérales (58), ladite deuxième saillie (90) étant décalée par rapport à ladite première extrémité où ladite deuxième saillie (90) est adjacente à ladite première saillie (52) lorsque ledit manchon (54) est dans ladite première position.

5. Interface de débrochage (46) de la revendication 4, dans laquelle ledit manchon (54) comporte en outre une troisième saillie (88) couplée auxdites parois latérales (58) au niveau de ladite deuxième extrémité, où ladite troisième saillie (88) est adjacente audit deuxième côté de porte (64) lorsque ledit manchon (54) est dans ladite deuxième position.

6. Interface de débrochage de la revendication 5, comprenant en outre une pluralité d'éléments de fixation couplant ladite bride à ladite porte et audit ressort.

7. Interface de débrochage de la revendication 5, dans laquelle ledit manchon et ladite bride sont dimensionnés de sorte qu'un espace entre ledit manchon et ladite première saillie fournisse un indice de protection contre des objets ayant une taille supérieure ou égale à 1 mm.
